# EUROPEAN PATENT APPLICATION

(11) **EP 4 836 340 A1**
(43) Date of publication of application: **04.11.2026**
(21) Application number: 24916789.1
(22) Date of filing: 30.12.2024
(51) Int. Cl.: H04L 5/00

(54) **COMMUNICATION METHOD AND COMMUNICATION APPARATUS**

(30) Priority: 08.01.2024 CN 202410033004
(71) Applicant: Huawei Technologies Co., Ltd., Shenzhen, Guangdong 518129 (CN)
(72) Inventor: JIANG, Chenglong, Shenzhen, Guangdong 518129 (CN); BI, Xiaoyan, Shenzhen, Guangdong 518129 (CN)
(74) Representative: Huawei European IPR
(86) International application number: PCT/CN2024/143981
(87) International publication number: WO 2025/148742

(57) **Abstract**

This application provides a communication method and a communication apparatus. The communication method includes: A network device sends first information to a terminal device, where the first information indicates a first CSI-RS resource pattern corresponding to N antenna ports; the network device sends first configuration information to the terminal device, where the first configuration information indicates (N + M) antenna ports and a second CSI-RS resource pattern corresponding to M antenna ports; and the network device receives a channel estimation result of the (N + M) antenna ports sent by the terminal device, where the channel estimation result of the (N + M) antenna ports is obtained based on the first CSI-RS resource pattern and the second CSI-RS resource pattern. According to the communication method, indication overhead for the network device to indicate a CSI-RS pattern can be reduced.

## Description

This application claims priority to Chinese Patent Application No. 202410033004.3, filed with the China National Intellectual Property Administration on January 8, 2024 and entitled "COMMUNICATION METHOD AND COMMUNICATION APPARATUS", which is incorporated herein by reference in its entirety.

### TECHNICAL FIELD

Embodiments of this application relate to the communication field, and in particular, to a communication method and a communication apparatus.

### BACKGROUND

In mobile communication technologies, a terminal device needs to perform channel estimation for each antenna port used by a network device.

Currently, a channel estimation method performed by a terminal device is as follows: The terminal device receives a channel state information reference signal (channel state information reference signal, CSI-RS) pattern sent by a network device, where the CSI-RS pattern may be considered as indicating a resource that is occupied by a CSI-RS sent by the network device; and the terminal device receives the CSI-RS based on the CSI-RS pattern, obtains a channel estimation result of each antenna port, and feeds back the channel estimation result to the network device.

However, when the network device indicates a CSI-RS pattern in a scenario with a large and dynamically changing quantity of antenna ports, the conventional method lacks flexibility in indication and suffers from high indication overhead.

### SUMMARY

This application provides a communication method and a communication apparatus, to reduce indication overhead for a network device to indicate a CSI-RS pattern b in a scenario with a large and dynamically changing quantity of antenna ports.

According to a first aspect, this application provides a communication method. The method may be performed by a first communication apparatus. The first communication apparatus is, for example, a terminal device, may be a component (for example, a chip or a chip system) configured in a terminal device, or may be a logical module or software that can implement all or some functions of a terminal device. This is not limited in this application. In this application, an example in which the first communication apparatus is a terminal device is used for description.

For example, the communication method includes: receiving first information, where the first information indicates a first channel state information reference signal CSI-RS resource pattern corresponding to N antenna ports; and receiving first configuration information, where the first configuration information indicates (N + M) antenna ports and a second CSI-RS resource pattern corresponding to M antenna ports of the (N + M) antenna ports, and both N and M are positive integers; and performing channel estimation for the (N + M) antenna ports based on the first CSI-RS resource pattern and the second CSI-RS resource pattern.

Both the first information and the first configuration information are sent by a second communication apparatus to the terminal device. Optionally, the second communication apparatus may be a network device. Optionally, the second communication apparatus may alternatively be a terminal device. In this application, an example in which the second communication apparatus is a network device is used to describe the technical solutions of this application. However, it may be understood that this does not constitute a limitation on this application.

In this technical solution, if the network device has sent, to the terminal device, the first CSI-RS resource pattern corresponding to the N antenna ports, and in this case, the network device needs the terminal device to perform channel estimation for the (N + M) antenna ports, when indicating a CSI-RS resource pattern to the terminal device, the network device indicates, to the terminal device, only a CSI-RS resource pattern (also referred to as a second CSI-RS resource pattern) corresponding to the remaining M antenna ports. Correspondingly, the terminal device determines, based on the first CSI-RS resource pattern and the second CSI-RS resource pattern, a CSI-RS resource pattern corresponding to the (N + M) antenna ports, and then receives a CSI-RS based on the CSI-RS resource pattern corresponding to the (N + M) antenna ports, to perform channel estimation for the (N + M) antenna ports.

The CSI-RS resource pattern corresponding to the remaining M antenna ports indicated by the network device may be understood as a CSI-RS resource pattern obtained after the network device generates, based on an existing CSI-RS resource pattern corresponding to the N antenna ports, the CSI-RS resource pattern corresponding to the (N + M) antenna ports and excludes the first CSI-RS resource pattern corresponding to the N antenna ports. Optionally, the network device generates, based on the CSI-RS resource pattern corresponding to the N antenna ports, the CSI-RS resource pattern corresponding to the (N + M) antenna ports according to a method that minimizes resource overhead.

The CSI-RS resource pattern corresponding to the (N + M) antenna ports determined by the terminal device may be understood as a resource that is occupied by all CSI-RSs actually sent by the network device when the network device needs the terminal device to perform channel estimation for the (N + M) antenna ports.

It can be learned that, in this technical solution, for the network device, when needing the terminal device to perform channel estimation for the (N + M) antenna ports, the network device no longer indicates, to the terminal device, the CSI-RS resource pattern corresponding to the (N + M) antenna ports, but indicates only the resource pattern corresponding to the remaining M antenna ports, thereby reducing overhead of indicating the CS-RS resource pattern.

With reference to the first aspect, in some possible implementations of the first aspect, the method further includes: receiving second information, where the second information indicates channel estimation assistance information corresponding to the (N + M) antenna ports. The performing channel estimation for the (N + M) antenna ports based on the first CSI-RS resource pattern and the second CSI-RS resource pattern includes: determining, based on the first CSI-RS resource pattern and the second CSI-RS resource pattern, a CSI-RS resource pattern corresponding to the (N + M) antenna ports; and performing channel estimation for the (N + M) antenna ports based on the CSI-RS resource pattern corresponding to the (N + M) antenna ports and the channel estimation assistance information.

In this technical solution, when indicating, to the terminal device, the CSI-RS resource pattern corresponding to the M antenna ports, the network device further indicates, to the terminal device, the channel estimation assistance information corresponding to the (N + M) antenna ports, so that the terminal device performs channel estimation for the (N + M) antenna ports based on the first CSI-RS resource pattern, the second CSI-RS resource pattern, and the channel estimation assistance information, thereby improving a channel estimation effect of the terminal device.

With reference to the first aspect, in a possible implementation, the method further includes: receiving third information, where the third information indicates a third CSI-RS resource pattern corresponding to the N antenna ports; and receiving fourth information, where the fourth information indicates to select the first CSI-RS resource pattern from the first CSI-RS resource pattern and the third CSI-RS resource pattern.

It may be understood that the network device may indicate, to the terminal device, a plurality of different CSI-RS resource patterns corresponding to the N antenna ports. Alternatively, in other words, the network device may indicate, to the terminal device, a plurality of types of CSI-RS resource patterns corresponding to the N antenna ports. It may be understood that, in this case, the terminal device needs to determine a type of CSI-RS resource pattern of a plurality of types that should be used when performing channel estimation for the (N + M) antenna ports.

Therefore, in this technical solution, after the network device sends, to the terminal device, the third CSI-RS resource pattern corresponding to the N antenna ports, and sends, to the terminal device, the first CSI-RS resource pattern corresponding to the N antenna ports, when needing the terminal device to perform channel estimation for the (N + M) antenna ports, the network device sends the fourth information to the terminal device, to indicate, by using the fourth information, the terminal device to select the first CSI-RS resource pattern from the first CSI-RS resource pattern and the third CSI-RS resource pattern.

Optionally, the network device may include the first information and the third information in a same message and send the message to the terminal device.

Optionally, the network device may include the first information and the third information in different messages and send the messages to the terminal device.

With reference to the first aspect, in some possible implementations of the first aspect, the method further includes: receiving second configuration information, where the second configuration information indicates (N + L) antenna ports and a fourth CSI-RS resource pattern corresponding to L antenna ports of the (N + L) antenna ports, and L is a positive integer; and performing channel estimation for the (N + L) antenna ports based on the first CSI-RS resource pattern and the fourth CSI-RS resource pattern.

In this technical solution, in this case, if the network device needs the terminal device to perform channel estimation for each of the (N + L) antenna ports, when indicating the (N + L) antenna ports to the terminal device, the network device indicates, to the terminal device, only a CSI-RS resource pattern (also referred to as a fourth CSI-RS resource pattern) corresponding to the remaining L antenna ports. Correspondingly, the terminal device learns of, based on the first CSI-RS resource pattern and the fourth CSI-RS resource pattern, a CSI-RS resource pattern corresponding to the (N + L) antenna ports, and then receives a CSI-RS based on the CSI-RS resource pattern corresponding to the (N + L) antenna ports, to perform channel estimation for the (N + L) antenna ports.

The resource pattern corresponding to the (N + L) antenna ports may be understood as a resource that is occupied by all CSI-RSs actually sent by the network device when the network device needs the terminal device to perform channel estimation for the (N + L) antenna ports.

Similarly, in this technical solution, for the network device, the network device no longer indicates, to the terminal device, the CSI-RS resource pattern corresponding to the (N + L) antenna ports, but indicates only the resource pattern corresponding to the remaining L antenna ports, thereby reducing overhead of indicating the CS-RS resource pattern.

With reference to the first aspect, in some possible implementations of the first aspect, the method further includes: receiving third configuration information, where the third configuration information indicates (N + M + K) antenna ports and a fifth CSI-RS resource pattern corresponding to K antenna ports of the (N + M + K) antenna ports, and K is a positive integer; and performing channel estimation for the (N + M + K) antenna ports based on the CSI-RS resource pattern corresponding to the (N + M) antenna ports and the fifth CSI-RS resource pattern.

The network device has sent, to the terminal device, the first CSI-RS resource pattern corresponding to the N antenna ports and the second CSI-RS resource pattern corresponding to the M antenna ports. Therefore, in this technical solution, when indicating the terminal device to perform channel estimation for the (N + M + K) antenna ports, and when indicating, to the terminal device, a CSI-RS resource pattern, the network device indicates only a CSI-RS resource pattern (also referred to as a fifth CSI-RS resource pattern) corresponding to the remaining K antenna ports. Correspondingly, the terminal device determines, based on the previously determined CSI-RS resource pattern corresponding to the (N + M) antenna ports and the currently indicated fifth CSI-RS resource pattern, a CSI-RS resource pattern corresponding to the (N + M + K) antenna ports, and then performs channel estimation for the (N + M + K) antenna ports based on the CSI-RS resource pattern corresponding to the (N + M + K) antenna ports.

The resource pattern corresponding to the (N + M + K) antenna ports may be understood as a resource that is occupied by all CSI-RSs actually sent by the network device when the network device needs the terminal device to perform channel estimation for the (N + M + K) antenna ports.

With reference to the first aspect, in some possible implementations of the first aspect, the method further includes: receiving fifth information, where the fifth information indicates to retain the CSI-RS resource pattern corresponding to the (N + M) antenna ports.

Alternatively, the fifth information may be referred to as indicating to store the CSI-RS resource pattern corresponding to the (N + M) antenna ports. Alternatively, the fifth information may be referred to as indicating to buffer the CSI-RS resource pattern corresponding to the (N + M) antenna ports.

Optionally, the fifth information may carry a first duration, and the first duration indicates a duration for which the terminal device retains the CSI-RS resource pattern corresponding to the (N + M) antenna ports.

It may be understood that, in this technical solution, the network device indicates the terminal device to retain the CSI-RS resource pattern corresponding to the (N + M) antenna ports, to ensure that when the network device needs the terminal device to perform channel estimation for the (N + M + K) antenna ports, if the network device indicates only the CSI-RS resource pattern corresponding to the K antenna ports, the terminal device may obtain the CSI-RS resource pattern corresponding to the (N + M) antenna ports.

With reference to the first aspect, in some possible implementations of the first aspect, the method further includes: sending sixth information, where the sixth information indicates capability information of the terminal device, and the capability information includes at least one of the following: a quantity of retained CSI-RS resource patterns corresponding to the N antenna ports, a maximum value of N, a maximum quantity of supported antenna ports, and a duration for retaining the first CSI-RS resource pattern.

With reference to the first aspect, in some possible implementations of the first aspect, before the fifth information, the method further includes: receiving seventh information, where the seventh information indicates the terminal device to report the capability information. Optionally, the seventh information is carried in radio resource control (radio resource control, RRC) signaling.

With reference to the first aspect, in some possible implementations of the first aspect, the method further includes: sending eighth information, where the eighth information indicates that the first CSI-RS resource pattern is missing.

Optionally, after the terminal device indicates, to the network device, that the first CSI-RS resource pattern is missing, the network device may indicate the first CSI-RS resource pattern to the terminal device. Correspondingly, the terminal device obtains, based on the first CSI-RS resource pattern and the second CSI-RS resource pattern, the CSI-RS resource pattern corresponding to the (N + M) antenna ports.

Optionally, after the terminal device indicates, to the network device, that the first CSI-RS resource pattern is missing, the network device may indicate, to the terminal device, the CSI-RS resource pattern corresponding to the (N + M) antenna ports. Correspondingly, the terminal device no longer needs to calculate, based on the first CSI-RS resource pattern and the second CSI-RS resource pattern, the CSI-RS resource pattern corresponding to the (N + M) antenna ports, but directly learns of, based on an indication of the network device, the CSI-RS resource pattern corresponding to the (N + M) antenna ports.

According to a second aspect, this application provides a communication method. The method may be performed by a second communication apparatus. The second communication apparatus may be a network device, may be a component (for example, a chip or a chip system) configured in a network device, or may be a logical module or software that can implement all or some functions of a network device. This is not limited in this application. Alternatively, the second communication apparatus may be a terminal device different from the terminal device in the first aspect, for example, referred to as a second terminal device, may be a component (for example, a chip or a chip system) configured in a second terminal device, or may be a logical module or software that can implement all or some functions of a second terminal device. This is not limited in this application. In this application, an example in which the second communication apparatus is a network device is used for description.

For example, the method includes: sending first information, where the first information indicates a first channel state information reference signal CSI-RS resource pattern corresponding to N antenna ports; sending first configuration information, where the first configuration information indicates (N + M) antenna ports and a second CSI-RS resource pattern corresponding to M antenna ports of the (N + M) antenna ports, where both N and M are positive integers; and receiving a channel estimation result of the (N + M) antenna ports sent by a terminal device, where the channel estimation result of the (N + M) antenna ports is obtained based on the first CSI-RS resource pattern and the second CSI-RS resource pattern.

With reference to the second aspect, in some possible implementations of the second aspect, the method further includes: sending second information, where the second information indicates channel estimation assistance information corresponding to the (N + M) antenna ports.

With reference to the second aspect, in some possible implementations of the second aspect, the method further includes: sending third information, where the third information indicates a third CSI-RS resource pattern corresponding to the N antenna ports; and sending fourth information, where the fourth information indicates to select the first CSI-RS resource pattern from the first CSI-RS resource pattern and the third CSI-RS resource pattern.

With reference to the second aspect, in some possible implementations of the second aspect, the method further includes: sending second configuration information, where the second configuration information indicates (N + L) antenna ports and a fourth CSI-RS resource pattern corresponding to L antenna ports of the (N + L) antenna ports, and L is a positive integer; and receiving a channel estimation result of the (N + L) antenna ports sent by the terminal device, where the channel estimation result of the (N + L) antenna ports is obtained based on the first CSI-RS resource pattern and the fourth CSI-RS resource pattern.

With reference to the second aspect, in some possible implementations of the second aspect, the method further includes: sending third configuration information, where the third configuration information indicates (N + M + K) antenna ports and a fifth CSI-RS resource pattern corresponding to K antenna ports of the (N + M + K) antenna ports, and K is a positive integer; and receiving a channel estimation result of the (N + M + K) antenna ports sent by the terminal device, where the channel estimation result of the (N + M + K) antenna ports is obtained based on a CSI-RS resource pattern corresponding to the (N + M) antenna ports and the fifth CSI-RS resource pattern, and the CSI-RS resource pattern corresponding to the (N + M) antenna ports is obtained based on the first CSI-RS resource pattern and the second CSI-RS resource pattern.

With reference to the second aspect, in some possible implementations of the second aspect, the method further includes: sending fifth information, where the fifth information indicates to retain the CSI-RS resource pattern corresponding to the (N + M) antenna ports.

With reference to the second aspect, in some possible implementations of the second aspect, the method further includes: receiving sixth information, where the sixth information indicates capability information of the terminal device, and the capability information includes at least one of the following: a quantity of retained CSI-RS resource patterns corresponding to the N antenna ports, a maximum value of N, a maximum quantity of supported antenna ports, and a duration for retaining the first CSI-RS resource pattern.

With reference to the second aspect, in some possible implementations of the second aspect, before receiving the fifth information, the method further includes: sending seventh information, where the seventh information indicates the terminal device to report the capability information.

With reference to the second aspect, in some possible implementations of the second aspect, the seventh information is carried in radio resource control RRC signaling.

With reference to the second aspect, in some possible implementations of the second aspect, the method further includes: receiving eighth information, where the eighth information indicates that the first CSI-RS resource pattern is missing.

According to a third aspect, this application provides a communication apparatus, including a module or a unit configured to implement the method according to any one of the first aspect and the possible implementations of the first aspect. It should be understood that each module or unit may implement a corresponding function by executing a computer program.

According to a fourth aspect, this application provides a communication apparatus, including a module or a unit configured to implement the method according to any one of the second aspect and the possible implementations of the second aspect. It should be understood that each module or unit may implement a corresponding function by executing a computer program.

According to a fifth aspect, this application provides a communication apparatus, including a processor. The processor is configured to perform the communication method according to any one of the first aspect or the possible implementations of the first aspect. The communication apparatus may be a chip or a chip system used in a terminal device.

The apparatus may further include a memory configured to store instructions and data. The memory is coupled to the processor. When the processor executes the instructions stored in the memory, the method described according to any one of the first aspect or the possible implementations of the first aspect may be implemented. The apparatus may further include a communication interface. The communication interface is used by the apparatus to communicate with another device. For example, the communication interface may be a transceiver, a circuit, a bus, a module, or another type of communication interface.

According to a sixth aspect, this application provides a communication apparatus, including a processor. The processor is configured to perform the communication method according to any one of the second aspect or the possible implementations of the second aspect. The communication apparatus may be a chip or a chip system used in a network device.

The apparatus may further include a memory configured to store instructions and data. The memory is coupled to the processor. When the processor executes the instructions stored in the memory, the method described according to any one of the second aspect or the possible implementations of the second aspect may be implemented. The apparatus may further include a communication interface. The communication interface is used by the apparatus to communicate with another device. For example, the communication interface may be a transceiver, a circuit, a bus, a module, or another type of communication interface.

According to a seventh aspect, this application provides a computer-readable storage medium. The computer-readable medium stores program code to be executed by a communication apparatus, and the program code includes instructions used for implementing the method according to any one of the first aspect and the possible implementations of the first aspect.

According to an eighth aspect, this application provides a computer-readable storage medium. The computer-readable medium stores program code to be executed by a communication apparatus, and the program code includes instructions used for implementing the method according to any one of the second aspect and the possible implementations of the second aspect.

According to a ninth aspect, this application provides a computer program product including instructions. When the computer program product runs on a communication apparatus, the communication apparatus is caused to implement the method according to any one of the first aspect and the possible implementations of the first aspect.

According to a tenth aspect, this application provides a computer program product including instructions. When the computer program product runs on a communication apparatus, the communication apparatus is caused to implement the method according to any one of the second aspect and the possible implementations of the second aspect.

According to an eleventh aspect, this application provides a communication system. The communication system includes a communication apparatus configured to implement the method according to any one of the first aspect and the possible implementations of the first aspect and/or a communication apparatus configured to implement the method according to any one of the second aspect and the possible implementations of the second aspect.

### BRIEF DESCRIPTION OF DRAWINGS

FIG. 1 is a diagram of an application scenario according to an embodiment of this application;
FIG. 2 is a diagram of another application scenario according to an embodiment of this application;
FIG. 3 is a diagram of still another application scenario according to an embodiment of this application;
FIG. 4 is a diagram of a communication system according to an embodiment of this application;
FIG. 5 is a diagram of an existing process in which a network device indicates a CSI-RS resource pattern according to an embodiment of this application;
FIG. 6 is a diagram of a process in which a network device obtains a CSI-RS resource pattern corresponding to nport antenna ports according to an embodiment of this application;
FIG. 7 is a schematic flowchart of a communication method according to an embodiment of this application;
FIG. 8 is a schematic flowchart of another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following describes the technical solutions in embodiments of this application with reference to the accompanying drawings in embodiments of this application.

For ease of clearly describing the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that, in embodiments of this application, a word like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, and (or) c may indicate a, b, c, a and b, a and c, b and c, or a, b, and c, where a, b, and c may be singular or plural.

In embodiments of this application, an indication includes an explicit indication (also referred to as a direct indication) and an implicit indication (also referred to as an indirect indication). Explicitly indicating information A means including the information A. Implicitly indicating information A means indicating the information A by using a correspondence between the information A and information B and by directly indicating the information B, where the correspondence between the information A and the information B may be predefined, pre-stored, pre-sintered, or preconfigured. Alternatively, indicating information A may be performed by using information B and a preset rule.

In embodiments of this application, "sending" and "receiving" represent signal transmission directions. For example, "sending information to a terminal" may be understood as a destination of the information being the terminal, and may include direct sending through an air interface or indirect sending by another unit or module through an air interface. "Receiving information from a network device" may be understood as a source of the information being the network device, and may include direct receiving from the network device through an air interface, or indirect receiving from the network device from another unit or module through an air interface. "Sending" may alternatively be understood as "outputting" of a chip interface, and "receiving" may alternatively be understood as "inputting" of the chip interface. In other words, sending and receiving may be performed between devices, for example, between a terminal and a network device; or sending or receiving may be performed inside a device, for example, between components, modules, chips, software modules, or hardware modules inside the device through a bus, a cable, or an interface.

For ease of understanding of the communication method provided in embodiments of this application, the following describes a system architecture and an application scenario of the communication method provided in embodiments of this application. It may be understood that the system architecture and the application scenario described in embodiments of this application are intended to describe the technical solutions in embodiments of this application more clearly, and do not constitute a limitation on the technical solutions provided in embodiments of this application.

The technical solutions provided in embodiments of this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a converged system of a plurality of systems.

The technical solutions provided in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system.

The technical solutions provided in embodiments of this application may be further applied to a future communication system, for example, a 6th generation (6th generation, 6G) communication system.

A device in the communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of example and not limitation, in embodiments of this application, the terminal device may alternatively be a wearable device. The wearable device may also be referred to as an intelligent wearable device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In this embodiment of this application, an apparatus configured to implement a function of the terminal device may be the terminal device, or may be an apparatus that can support the terminal device in implementing the function, such as a chip system, where the apparatus may be installed in the terminal device or used in matching with the terminal device. In this embodiment of this application, the chip system may include a chip, or may include a chip and another discrete device. In embodiments of this application, only an example in which the apparatus configured to implement the function of the terminal device is a terminal device is used for description, and constitutes no limitation on the solutions in embodiments of this application.

A network device in embodiments of this application may be a device configured to communicate with the terminal device. The network device may also be referred to as an access network device or a radio access network device. For example, the network device may be a base station. In embodiments of this application, the network device may be a radio access network (radio access network, RAN) node (or device) that enables the terminal device to access a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. Optionally, the RAN node may alternatively be a server, a wearable device, a vehicle, a vehicle-mounted device, or the like. For example, an access network device in a vehicle to everything (vehicle to everything, V2X) technology may be a roadside unit (roadside unit, RSU). Neither of a specific technology and a specific device form used by the network device is limited in embodiments of this application. In some deployments, the network device mentioned in embodiments of this application may be a CU, or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes respectively implement some functions of a base station. For example, the RAN node may be a CU, a DU, a CU-CP, a CU-UP, or an RU. The CU and the DU may be separately arranged, or may be included in a same network element, for example, a BBU. The RU may be included in a radio frequency device or a radio unit, for example, included in an RRU, an AAU, or an RRH.

The RAN node may support one or more types of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If a fronthaul interface between the DU and the RU is another type of interface, in comparison with the CPRI, some downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, split manners of the DU and RU are different, and correspond to different categories (category, Cat) of eCPRIs, such as eCPRI Cat A, B, C, D, E, and F.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of a network device may be a network device, or may be an apparatus that can support the network device in implementing the function, for example, a chip system, a hardware circuit, a software module, or a combination of a hardware circuit and a software module. The apparatus can be installed in the network device, or can match the network device for use. In embodiments of this application, only an example in which the apparatus for implementing the function of the network device is a network device is used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. A scenario in which the network device and the terminal device are located is not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

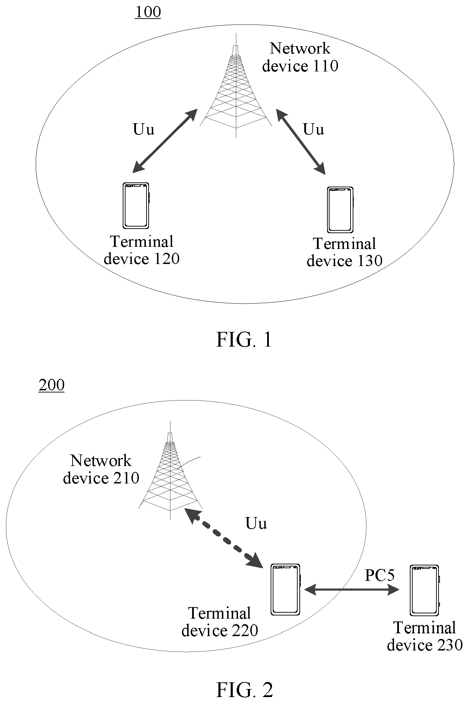

FIG. 1 is a diagram of an application scenario to which a method according to an embodiment of this application is applicable. As shown in FIG. 1, a communication system 100 may include at least one network device, for example, a network device 110 shown in FIG. 1. The communication system 100 may further include at least one terminal device, for example, a terminal device 120 and a terminal device 130 shown in FIG. 1. Both the terminal device 120 and the terminal device 130 are in a network coverage area of the network device 110. The network device 110 communicates with both the terminal device 120 and the terminal device 130 through a first interface. The first interface is, for example, referred to as a Uu interface.

FIG. 2 is a diagram of another application scenario to which a method according to an embodiment of this application is applicable. As shown in FIG. 2, a communication system 200 may include at least one network device, for example, a network device 210 shown in FIG. 2. The communication system 200 may further include at least one terminal device, for example, a terminal device 220 and a terminal device 230 shown in FIG. 2. The terminal device 220 is in a network coverage area of the network device 210, and the terminal device 230 is not in the network coverage area of the network device 210. The terminal device 220 communicates with the network device 210 through a first interface. The first interface is, for example, referred to as a Uu interface. The terminal device 220 communicates with the terminal device 230 through a second interface. The second interface is, for example, referred to as a PC5 interface.

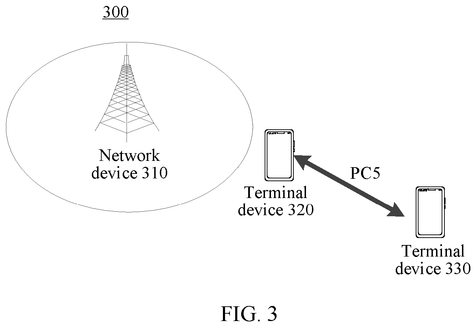

FIG. 3 is a diagram of still another application scenario to which a method according to an embodiment of this application is applicable. As shown in FIG. 3, a communication system 300 may include at least one network device, for example, a network device 310 shown in FIG. 3. The communication system 300 may further include at least one terminal device, for example, a terminal device 320 and a terminal device 330 shown in FIG. 3. Neither the terminal device 320 nor the terminal device 330 is in a network coverage area of the network device 310. The terminal device 320 communicates with the terminal device 330 through a second interface. The second interface is, for example, referred to as a PC5 interface.

For the communication systems shown in FIG. 1 to FIG. 3, communication devices may alternatively communicate with each other by using a multi-antenna technology.

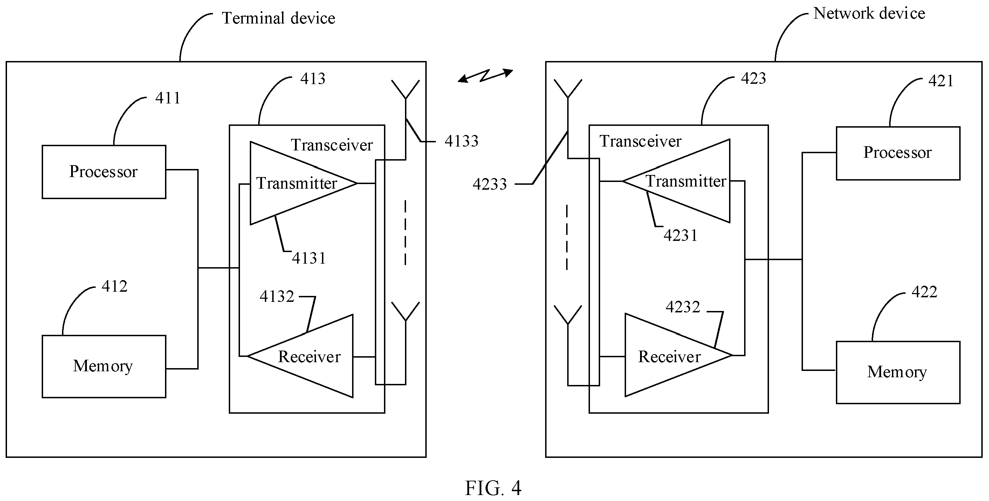

FIG. 4 is a diagram of another communication system to which a method according to an embodiment of this application is applicable. As shown in FIG. 4, a terminal device includes a processor 411, a memory 412, and a transceiver 413. The transceiver 413 includes a transmitter 4131, a receiver 4132, and an antenna 4133. A network device includes a processor 421, a memory 422, and a transceiver 423. The transceiver 423 includes a transmitter 4231, a receiver 4232, and an antenna 4233.

The processor 411, the memory 412, and the transceiver 413 communicate with each other through an internal connection path, and the processor 421, the memory 422, and the transceiver 423 communicate with each other through an internal connection path.

The receiver 4132 may be configured to receive transmission control information through the antenna 4133, and the transmitter 4131 may be configured to send transmission feedback information to the network device through the antenna 4133. The transmitter 4231 may be configured to send the transmission control information to the terminal device through the antenna 4233, and the receiver 4232 may be configured to receive, through the antenna 4233, the transmission feedback information sent by the terminal device.

It should be noted that FIG. 1 to FIG. 4 are merely simplified diagrams used as examples for ease of understanding. In actual application, the communication system may include a plurality of network devices, or may include a plurality of terminal devices. Quantities of network devices and terminal devices included in the communication system are not limited in embodiments of this application.

Currently, for FIG. 1 to FIG. 4, when two devices (for example, referred to as a communication device 1 and a communication device 2) in the communication system need to communicate with each other, the following scenario may exist: The communication device 1 sends a reference signal to the communication device 2, and correspondingly, the communication device 2 performs, based on the received reference signal, channel estimation for each antenna port used by the communication device 1, obtains a channel estimation result of each antenna port, and feeds back the channel estimation result to the communication device 1, so that the communication device 1 can better send data and/or receive data.

For example, both the communication device 1 and the communication device 2 are terminal devices.

For another example, the communication device 1 is a network device, and the communication device 2 is a terminal device.

Optionally, the reference signal is referred to as a pilot signal or a base signal.

For ease of understanding the technical solutions in embodiments of this application, the following uses an example in which the communication device 1 is a network device and the communication device 2 is a terminal device for description. However, it should be understood that this example does not constitute a limitation on the technical solutions in embodiments of this application.

Specifically, when the communication device 1 is a network device and the communication device 2 is a terminal device, a process in which the terminal device performs channel estimation is as follows: The network device sends resource information to the terminal device, where the resource information indicates a quantity of antenna ports of the network device and a resource pattern (pattern) of a reference signal corresponding to the quantity of antenna ports, and the resource pattern of the reference signal may be considered to indicate, to the terminal device, resources that are occupied by a reference signal sent by the network device, so that the terminal device learns of resources on which the reference signal is received; and the terminal device receives the reference signal on the corresponding resources based on the resource pattern of the reference signal, and obtains, based on the received reference signal, a channel estimation result of each antenna port.

In an example, the reference signal may be a (channel state information reference signal, CSI-RS). Further, the resource pattern of the CSI-RS is referred to as a CSI-RS resource pattern (CSI-RS resource pattern). For ease of understanding, the following describes the technical solutions in embodiments of this application by using an example in which the reference signal is a CSI-RS.

In some current implementations, when the network device sends a CSI-RS resource pattern to the terminal device, CSI-RSs indicated by the CSI-RS resource pattern are sent on some antenna ports (which may be understood as that a quantity of sent CSI-RSs is less than a quantity of antenna ports used by the network device). Correspondingly, for the terminal device, the terminal device receives the CSI-RSs on the antenna ports based on the CSI-RS resource pattern, and then obtains, based on the CSI-RSs received on the antenna ports and channel estimation assistance information, a channel estimation result of each antenna port. The channel estimation assistance information may be understood as being used by the terminal device to restore a channel estimation result of all antenna ports of the network device after the terminal device obtains, based on CSI-RSs received on the antenna ports, a channel estimation result of some antenna ports. Optionally, after determining the CSI-RS resource pattern, the network device may send the channel estimation assistance information to the terminal device, so that the terminal device learns of the channel estimation assistance information.

However, in a scenario with a large and dynamically changing quantity of antenna ports, the foregoing implementations suffer from high CSI-RS pattern indication overhead.

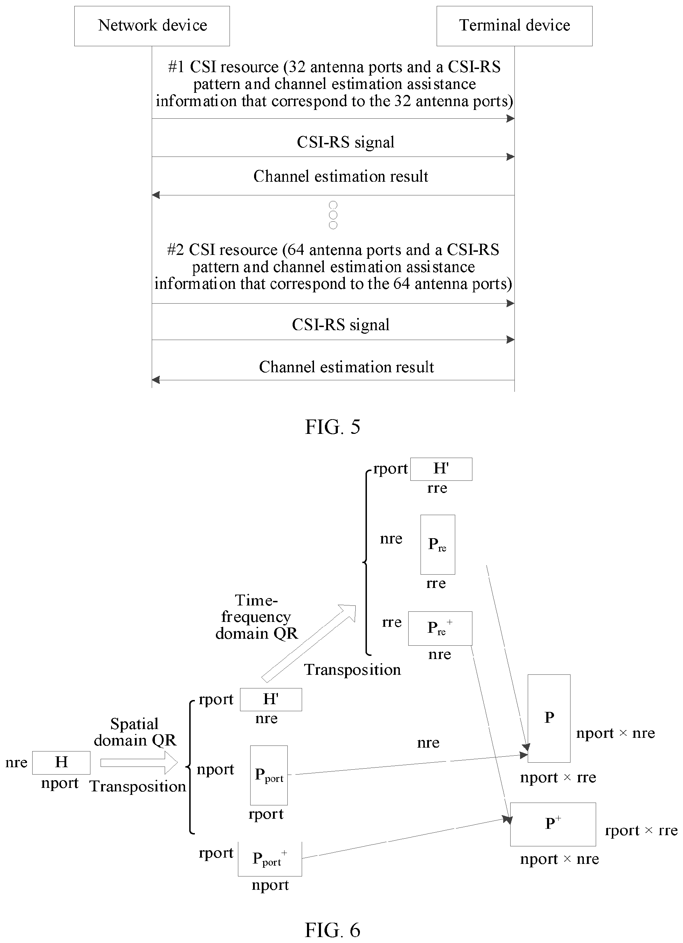

For example, as shown in FIG. 5, if the network device needs the terminal device to perform channel estimation for 32 antenna ports in a time period 1, the network device sends #1 CSI resource information to the terminal device, where the #1 CSI resource information indicates the 32 antenna ports and a CSI-RS resource pattern and channel estimation assistance information that correspond to the 32 antenna ports. Then, the network device sends a CSI-RS signal, and the terminal device receives the CSI-RS signal, and obtains, based on the received CSI-RS signal and the channel estimation assistance information, a channel estimation result of the 32 antenna ports. After that, if the network device needs the terminal device to perform channel estimation for 64 antenna ports in a time period 2, the network device sends #2 CSI resource information to the terminal device, where the #2 CSI resource information indicates the 64 antenna ports and a CSI-RS resource pattern and channel estimation assistance information that correspond to the 64 antenna ports. Then, the network device sends a CSI-RS signal, and the terminal device receives the CSI-RS signal, and obtains, based on the received CSI-RS signal and the channel estimation assistance information, a channel estimation result of the 64 antenna ports.

In other words, when a quantity of antenna ports of the network device changes, the network device needs to re-indicate, to the terminal device, a CSI-RS resource pattern and channel estimation assistance information that correspond to antenna ports with a new quantity.

To resolve the foregoing problem, an embodiment of this application provides a communication method, to reduce overhead for a network device to indicate a CSI-RS resource pattern in a scenario with a large and dynamically changing.

The following describes in detail the communication method provided in embodiments of this application with reference to the accompanying drawings.

Before the communication method provided in embodiments of this application is described, with reference to FIG. 6, a method for obtaining the CSI-RS resource pattern and the channel estimation assistance information by the network device is described as an example.

As shown in FIG. 6, the method includes the following steps.
(1) Obtain a spatial domain CSI-RS resource pattern.

A channel matrix is obtained first. For example, a channel matrix is denoted as H, and the channel matrix H has dimensions of nre × nport, where nre represents a quantity of REs used for transmitting a CSI-RS, and nport represents a quantity of antenna ports for which channel estimation needs to be performed. The channel matrix may be, for example, a channel matrix of a downlink channel obtained by estimating an uplink channel based on uplink-downlink reciprocity, may be a channel matrix obtained based on a historical time period, or may be a channel matrix predicted by an artificial intelligence (artificial intelligence, AI) model. This is not limited in embodiments of this application.

Spatial domain orthogonal-triangular (quadrature rectangle, QR) processing is performed on the channel matrix H to obtain a matrix Pₚₒᵣₜ. The matrix Pₚₒᵣₜ has dimensions of nport × rport, and represents rport antenna ports selected from nport antenna ports to send a CSI-RS. That is, antenna ports related to a sent CSI-RS signal may be learned of by using the Pₚₒᵣₜ. Therefore, the matrix Pₚₒᵣₜ may also be referred to as a spatial domain CSI-RS resource pattern.

A spatial domain matrix Pₚₒᵣₜ⁺ is obtained based on the matrix Pₚₒᵣₜ. The Pₚₒᵣₜ⁺ has dimensions of rport × nport, and represents spatial domain channel estimation assistance information.

(2) Obtain a time-frequency domain CSI-RS resource pattern.

A matrix obtained by multiplying the channel matrix H by the Pₚₒᵣₜ is transposed to obtain a matrix H'. The matrix H' has dimensions of rport × nre.

Time-frequency domain QR processing is performed on the matrix H' to obtain a matrix Pᵣₑ. The matrix Pᵣₑ has dimensions of nre × rre, and represents rre REs selected from nre REs to send a CSI-RS. That is, a time-frequency resource related to a sent CSI-RS signal may be learned of by using the Pᵣₑ. Therefore, the matrix Pᵣₑ is also referred to as a time-frequency domain CSI-RS resource pattern.

A matrix Pᵣₑ⁺ is obtained based on the matrix Pᵣₑ, and represents time-frequency domain channel estimation assistance information.

(3) Obtain a final CSI-RS resource pattern (a matrix P) and channel estimation assistance information (a matrix P⁺) through processing.

Specifically, the spatial domain CSI-RS resource pattern and the time-frequency domain CSI-RS resource pattern Pᵣₑ are combined through Kronecker product, to form a matrix P. The row dimension of the matrix P is nport × nre, and the column dimension of the matrix P is rport × rre. It may be understood that the matrix P is a finally determined CSI-RS resource pattern corresponding to the nport antenna ports, and a port and a specific time-frequency resource that are related to a sent CSI-RS signal may be learned of by using the matrix P.

Specifically, the spatial domain channel estimation assistance information Pₚₒᵣₜ⁺ and the time-frequency domain channel estimation assistance information Pᵣₑ⁺ are combined through Kronecker product, to form a matrix P⁺. The row dimension of the matrix P⁺ is rport × rre, and the column dimension of the matrix P⁺ is nport × nre. It may be understood that the matrix P⁺ is finally determined channel estimation assistance information corresponding to the nport antenna ports.

It should be noted that FIG. 6 merely describes an example of a method for obtaining the CSI-RS resource pattern and the channel estimation assistance information by the network device, but does not constitute a limitation on this application. For example, in another optional implementation, a time-frequency domain CSI-RS resource pattern may be obtained first, and a spatial domain CSI-RS resource pattern may be obtained next. Then, a final CSI-RS resource pattern corresponding to nport antenna ports is determined based on the time-frequency domain CSI-RS resource pattern and the spatial domain CSI-RS resource pattern.

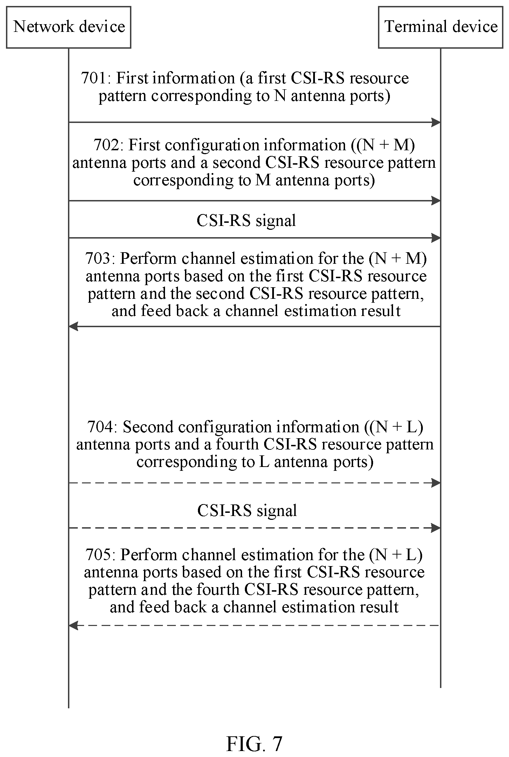

FIG. 7 is a schematic flowchart of a communication method 700 according to an embodiment of this application. FIG. 7 describes the method only from a perspective of interaction between a network device and a terminal device, and should not constitute any limitation on this embodiment of this application. The network device in FIG. 7 may be replaced with a component (for example, a chip, a chip system, or a processor) configured in the network device, or a logical module, software, or the like that can implement all or some functions of the network device. The terminal device may be replaced with a component (for example, a chip, a chip system, or a processor) configured in the terminal device, or a logical module, software, or the like that can implement all or some functions of the terminal device.

The method 700 shown in FIG. 7 includes step 701 to step 705. The following describes the steps in the method 700 in detail.

Step 701: The network device sends first information to the terminal device, where the first information indicates a first CSI-RS resource pattern corresponding to N antenna ports; and the terminal device receives the first information.

In another explanation, the terminal device may be understood as a device that needs to perform channel estimation and feed back a channel estimation result of each antenna port. Correspondingly, the network device is a device that needs to receive the channel estimation result.

In this embodiment, the network device sends the first information to the terminal device, where the first information indicates the first CSI-RS resource pattern corresponding to the N antenna ports. The first CSI-RS resource pattern corresponding to the N antenna ports may alternatively be described as the first CSI-RS resource pattern of the N antenna ports. It may be understood that the first CSI-RS resource pattern may be used by the terminal device to perform channel estimation for the N antenna ports.

Optionally, if the network device needs the terminal device to perform channel estimation for the N antenna ports, the network device may send, to the terminal device, indication information that indicates to perform channel estimation for the N antenna ports. Correspondingly, the terminal device performs channel estimation for the N antenna ports based on indication and the first CSI-RS resource pattern.

Step 702: The network device sends first configuration information to the terminal device, where the first configuration information indicates (N + M) antenna ports and a second CSI-RS resource pattern corresponding to M antenna ports; and the terminal device receives the first configuration information.

In this embodiment, when needing to obtain a channel estimation result of the (N + M) antenna ports, the network device indicates, to the terminal device by using the first configuration information, the CSI-RS resource pattern (namely, the second CSI-RS resource pattern) corresponding to the M antenna ports. In other words, in this embodiment, when needing to obtain a channel estimation result of the (N + M) antenna ports, the network device does not indicate, to the terminal device, a CSI-RS resource pattern corresponding to the (N + M) antenna ports.

Specifically, in this embodiment, when channel estimation needs to be performed for the (N + M) antenna ports, the second CSI-RS resource pattern is a CSI-RS resource pattern corresponding to the remaining M antenna ports other than the first CSI-RS resource pattern of the N antenna ports that has been configured by the network device for the terminal device. It may be understood that the second CSI-RS resource pattern may be used by the terminal device to perform channel estimation for the M antenna ports, and the second CSI resource pattern changes according to a change in the first CSI-RS resource pattern.

In an implementation, a method for determining, by the network device, the second CSI-RS resource pattern based on the first CSI-RS resource pattern includes the following steps.
(1) The network device obtains, based on a channel matrix H (the column dimension of the H is N + M) corresponding to the (N + M) antenna ports, a projection matrix V corresponding to the channel matrix H.

For example, the V may be obtained by performing singular value decomposition (singular value decomposition, SVD) on the channel matrix H corresponding to the (N + M) antenna ports. $H {\to }^{SVD} U ⋅ S ⋅ {V}^{H}$

V^{H} represents a transpose of the matrix V, V represents a projection matrix of the channel matrix H, U represents a matrix including a left singular vector of the channel matrix H, and S represents a matrix including a singular value of the channel matrix H.

(2) Obtain, based on the projection matrix V and a matrix P_{N,prior}, an undersampling permutation matrix ${P}_{N + M} = \left[\begin{matrix}{P}_{N , prior} & 0 \\ 0 & {P}_{M}\end{matrix}\right]$.

The matrix P_{N,prior} represents the known first CSI-RS resource pattern corresponding to the N antenna ports. An element in the matrix P_{N,prior} is either 0 or 1, and in the matrix P_{N,prior}, each column has only one 1, each row has a maximum of one 1, and a location of 1 in each column indicates that a corresponding antenna port is selected from the channel matrix H to send a CSI-RS signal.

The matrix P_{M} represents a resource pattern corresponding to the remaining M antenna ports.

It may be understood that $\left[\begin{matrix}{P}_{N , prior} & 0 \\ 0 & {P}_{M}\end{matrix}\right]$ is a CSI-RS resource pattern corresponding to the (N + M) antenna ports. It should be noted that 0 in the matrix $\left[\begin{matrix}{P}_{N , prior} & 0 \\ 0 & {P}_{M}\end{matrix}\right]$ represents a matrix whose elements are all 0.

Optionally, the network device may determine, based on the CSI-RS resource pattern corresponding to the (N + M) antenna ports, channel estimation assistance information corresponding to the (N + M) antenna ports. For example, the network device obtains, based on a formula ${P}_{N + M}^{†} = {\left({V}^{H}⋅\left[\begin{matrix}{P}_{N , prior} & 0 \\ 0 & {P}_{M}\end{matrix}\right]\right)}^{- 1} ⋅ {V}^{H}$, the channel estimation assistance information corresponding to the (N + M) antenna ports.

Step 703: The terminal device performs channel estimation for the (N + M) antenna ports based on the first CSI-RS resource pattern and the second CSI-RS resource pattern.

In this embodiment, after the terminal device receives the first configuration information, because the terminal device is indicated of the (N + M) antenna ports, the terminal device may learn that channel estimation needs to be performed for the (N + M) antenna ports. In addition, because the first configuration information indicates the CSI-RS resource pattern corresponding to the M antenna ports, the terminal device first obtains the first CSI-RS resource pattern corresponding to the N antenna ports, and then determines, based on the first CSI-RS resource pattern and the CSI-RS resource pattern corresponding to the M antenna ports that is newly indicated by the network device, a CSI-RS resource pattern corresponding to the (N + M) antenna ports. After that, the terminal device receives, based on the determined CSI-RS resource pattern corresponding to the (N + M) antenna ports, a CSI-RS signal sent by the network device, and obtains, based on the received CSI-RS signal, a channel estimation result of the (N + M) antenna ports.

For example, in an implementation, that the terminal device obtains the channel estimation result of the (N + M) antenna ports based on the received CSI-RS signal includes: receiving second information sent by the network device, where the second information indicates channel estimation assistance information corresponding to the (N + M) antenna ports; and obtaining, based on the CSI-RS signal sent by the network device and the channel estimation assistance information, the channel estimation result of the (N + M) antenna ports.

For example, the terminal device performs channel estimation for the (N + M) antenna ports based on a formula ${H}^{∧} = H ⋅ \left[\begin{matrix}{P}_{N , prior} & 0 \\ 0 & {P}_{M}\end{matrix}\right] ⋅ {P}_{N + M}^{+}$, to obtain the channel estimation result of the (N + M) antenna ports, where ${P}_{N + M}^{†}$ is the channel estimation assistance information corresponding to the (N + M) antenna ports.$H ⋅ \left[\begin{matrix}{P}_{N , prior} & 0 \\ 0 & {P}_{M}\end{matrix}\right]$ represents a channel estimation result that is of ports corresponding to a CSI-RS signal sent by the network device and that is obtained by the terminal device, and H^ represents a channel estimation result of the (N + M) antenna ports that is obtained by the terminal device, also referred to as a channel estimation result of the (N + M) antenna ports obtained by performing LS estimation and interpolation filtering on the channel estimation result of the ports corresponding to the CSI-RS sent by the network.

It should be noted herein that an implementation of obtaining, by the terminal device, the channel estimation result of the (N + M) antenna ports based on the channel estimation assistance information is described herein only as an example. However, it should be understood that the implementation does not constitute a limitation on this embodiment of this application. For example, after determining, based on the method provided in this embodiment, the CSI-RS resource pattern corresponding to the (N + M) antenna ports, the terminal device may alternatively determine the channel estimation result of the (N + M) antenna ports in another manner.

It can be learned that, in the communication method provided in this embodiment, when the network device needs the channel estimation result of the (N + M) antenna ports, if the network device has sent, to the terminal device, the first CSI-RS resource pattern corresponding to the N antenna ports, the network device indicates only the CSI-RS resource pattern corresponding to the remaining M antenna ports when indicating a CSI-RS resource pattern to the terminal device. Correspondingly, the terminal device learns of, based on the CSI-RS resource pattern corresponding to the N antenna ports and the CSI-RS resource pattern corresponding to the M antenna ports that is currently indicated by the network device, the CSI-RS resource pattern corresponding to the (N + M) antenna ports, to implement channel estimation for the (N + M) antenna ports. In other words, in the communication method, when the network device needs to obtain the channel estimation result of the (N + M) antenna ports, the network device no longer indicates, to the terminal device, the CSI-RS resource pattern corresponding to the (N + M) antenna ports, but indicates only the CSI-RS resource pattern corresponding to the M antenna ports, thereby reducing overhead of indicating a CSI-RS resource pattern.

It should be understood that there may be a plurality of different types of CSI-RS resource patterns corresponding to the N antenna ports. Specifically, a difference between different types of CSI-RS resource patterns lies in that antenna ports and time-frequency resources that are occupied by indicated CSI-RSs sent by the network device are different. It may be understood that the network device indicates, to the terminal device, a plurality of different types of CSI-RS resource patterns corresponding to the N antenna ports, for example, in addition to indicating the first CSI-RS resource pattern to the terminal device by using the first information, the network device further indicates, to the terminal device by using third information, a third CSI-RS resource pattern corresponding to the N antenna ports, where the first CSI-RS resource pattern is different from the third CSI-RS resource pattern. In this case, after receiving the first configuration information sent by the network device, the terminal device needs to learn of a CSI-RS resource pattern that should be selected from the plurality of types of CSI-RS resource patterns corresponding to the N antenna ports.

Therefore, in this embodiment of this application, optionally, if the network device indicates, to the terminal device, the first CSI-RS resource pattern corresponding to the N antenna ports and the third CSI-RS resource pattern corresponding to the N antenna ports, the network device sends fourth information to the terminal device, where the fourth information indicates the terminal device to select the first CSI-RS resource pattern from the first CSI-RS resource pattern and the third CSI-RS resource pattern, so that the terminal device learns that the first CSI-RS resource pattern rather than the third CSI-RS resource pattern is used when channel estimation is performed for the (N + M) antenna ports.

Optionally, after receiving the first configuration information, the terminal device may not be able to obtain the first CSI-RS resource pattern corresponding to the N antenna ports. For example, when a duration from receiving, by the first communication device, the first CSI-RS resource pattern corresponding to the N antenna ports to receiving the first configuration information is long, the first communication device automatically deletes the first CSI-RS resource pattern corresponding to the N antenna ports. In this case, the terminal device cannot obtain the first CSI-RS resource pattern corresponding to the N antenna ports, which is also referred to as the first CSI-RS resource pattern corresponding to the N antenna ports being missing.

In this embodiment of this application, when the first CSI-RS resource pattern corresponding to the N antenna ports is missing in the terminal device, the terminal device may send eighth information to the network device, where the eighth information indicates that the first CSI-RS resource pattern is missing; and correspondingly, after receiving the eighth information, the network device may resend, to the terminal device, the first CSI-RS resource pattern corresponding to the N antenna ports, so that the terminal device performs channel estimation based on the first CSI-RS resource pattern corresponding to the N antenna ports and the CSI-RS resource pattern corresponding to the M antenna ports. Alternatively, the network device may directly send, to the terminal device, the CSI-RS resource pattern corresponding to the (N + M) antenna ports; and correspondingly, the terminal device no longer needs to determine the CSI-RS resource pattern corresponding to the (N + M) antenna ports based on the first CSI-RS resource pattern corresponding to the N antenna ports and the CSI-RS resource pattern corresponding to the M antenna ports, but directly performs channel estimation for the (N + M) antenna ports based on the CSI-RS resource pattern corresponding to the (N + M) antenna ports that is indicated by a second communication device.

Optionally, if the network device further needs to obtain a channel estimation result of (N + L) antenna ports, as shown in FIG. 7, the communication method in this embodiment of this application further includes the following steps.

Step 704: The network device sends second configuration information to the terminal device, where the second configuration information indicates the (N + L) antenna ports and a fourth CSI-RS resource pattern corresponding to L antenna ports.

A method for obtaining, by the network device based on the first CSI-RS resource pattern corresponding to the N antenna ports, a CSI-RS resource pattern corresponding to the L antenna ports of the (N + L) antenna ports may be similar to content of obtaining, by the network device based on the first CSI-RS resource pattern of the N antenna ports, the CSI-RS resource pattern corresponding to the M antenna ports of the (N + M) antenna ports. Details are not described again.

S705: The terminal device performs channel estimation for the (N + L) antenna ports based on the first CSI-RS resource pattern and the fourth CSI-RS resource pattern.

Specifically, in this embodiment, when learning, based on the second configuration information, that channel estimation needs to be performed for the (N + L) antenna ports, the terminal device first obtains the first CSI-RS resource pattern corresponding to the N antenna ports, and then learns of, based on the first CSI-RS resource pattern and the CSI-RS resource pattern corresponding to the L antenna ports, a CSI-RS resource pattern corresponding to the (N + L) antenna ports and determines channel estimation assistance information corresponding to the (N + L) antenna ports. After that, the terminal device receives, based on the CSI-RS resource pattern corresponding to the (N + L) antenna ports, a CSI-RS signal sent by the second communication device, and finally obtains a channel estimation result of the (N + L) antenna ports by using the channel estimation assistance information. Optionally, the network device may indicate, to the terminal device, the channel estimation assistance information corresponding to the (N + L) antenna ports.

In an optional embodiment, the terminal device in this embodiment of this application may send sixth information to the network device, where the sixth information indicates capability information of the terminal device. The capability information includes at least one of the following:
(1) A quantity of CSI-RS resource patterns that are retained by the terminal device and that correspond to the N antenna ports.

The quantity of CSI-RS resource patterns that are retained by the terminal device and that correspond to the N antenna ports is also referred to as a quantity of sets of CSI-RS resource patterns that are retained by the terminal device and that correspond to the N antenna ports.

For example, if the quantity of CSI-RS resource patterns that are retained by the terminal device and that correspond to the N antenna ports is 2, it indicates that there are two types of CSI-RS resource patterns that can be used to perform channel estimation for the N antenna ports.

A difference between different CSI-RS resource patterns corresponding to the N antenna ports mainly lies in that ports and time-frequency resources that are occupied by sent CSI-RS signals are different.

Optionally, when there are a plurality of types of CSI-RS resource patterns that are retained by the terminal device and that correspond to the N antenna ports, the network device first determines a CSI-RS resource pattern (namely, the first CSI-RS resource pattern) that needs to be used, and then indicates the determined CSI-RS resource pattern to the terminal device.

For example, N = 64, and there are two types of CSI-RS resource patterns corresponding to the 64 antenna ports, that is, the terminal device supports two types of CSI-RS resource patterns corresponding to 64 antenna ports. In this case, if the network device needs to obtain the channel estimation result of the (N + M) antenna ports, and if M is less than 64, the network device may determine, as the first CSI-RS resource pattern, a CSI-RS resource pattern that occupies more time-frequency resources of the two types of CSI-RS resource patterns corresponding to the 64 antenna ports, and then indicate the selected first CSI-RS resource pattern to the terminal device.

For example, N = 64, and there are two types of CSI-RS resource patterns corresponding to the 64 antenna ports, that is, the terminal device supports two types of CSI-RS resource patterns corresponding to 64 antenna ports. In this case, if the network device needs to obtain the channel estimation result of the (N + M) antenna ports, and if M is greater than 64, the network device may determine, as the first CSI-RS resource pattern, a CSI-RS resource pattern that occupies fewer time-frequency resources of the two types of CSI-RS resource patterns corresponding to the 64 antenna ports, and then indicate the selected first CSI-RS resource pattern to the terminal device.

(2) A maximum value of N.

For example, N is equal to 64, that is, the terminal device can store a CSI-RS resource pattern corresponding to a maximum of 64 antenna ports.

(3) A maximum value of a quantity of supported antenna ports, and/or a duration for retaining the first CSI-RS resource pattern.

The maximum value of the quantity of supported antenna ports indicates a maximum value of a quantity of antenna ports for which the terminal device may perform channel estimation when performing channel estimation.

For example, when N is equal to 64, channel estimation may be performed for a maximum of 128 antenna ports.

For another example, when N is equal to 128, channel estimation may be performed for a maximum of 512 antenna ports.

It should be noted herein that a manner of reporting, by the terminal device, at least one of the capability information to the network device is not limited in this embodiment. For example, in an implementation, the terminal device actively sends the capability information to the network device. For another example, in another implementation, the network device sends seventh information to the terminal device, where the seventh information indicates the terminal device to report the capability information. Correspondingly, the terminal device indicates, in response to the seventh information, the capability information of the terminal device to the network device.

Optionally, the seventh information is carried in an RRC message.

The duration for retaining the first CSI-RS resource pattern may be understood as a duration for which the terminal device can store the first CSI-RS resource pattern. In some implementations, the duration may be predefined in a protocol, for example, 30 seconds. Further, if the network device indicates the terminal device to retain the first CSI-RS resource pattern, the terminal device retains the first CSI-RS resource pattern for 30 seconds. In another implementation, the duration for which the terminal device retains the first CSI-RS resource pattern is indicated by the network device.

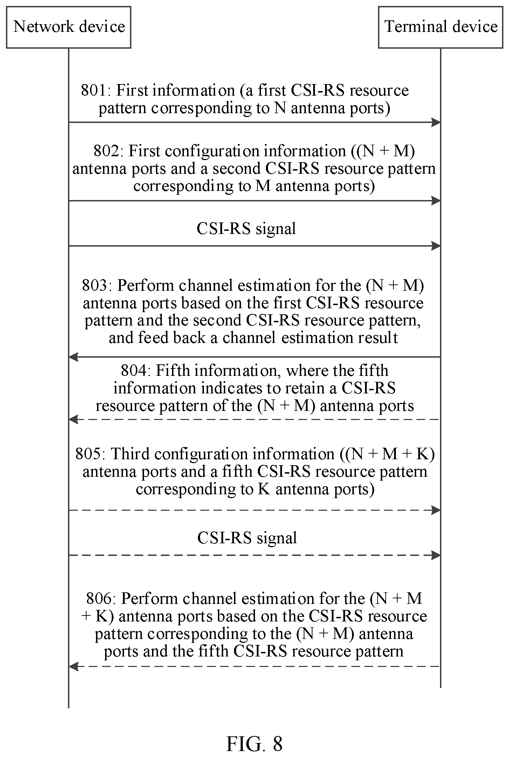

Optionally, based on the foregoing embodiments, if the network device further intends to learn of a channel estimation result of (N + M + K) antenna ports, the network device may send third configuration information to the terminal device, where the third configuration information indicates the (N + M + K) antenna ports and a fifth CSI-RS resource pattern corresponding to K antenna ports. Correspondingly, when receiving the third configuration information, the terminal device performs channel estimation for the (N + M + K) antenna ports based on the CSI-RS resource pattern corresponding to the (N + M) antenna ports and the fifth CSI-RS resource pattern. That is, in this embodiment, the terminal device performs channel estimation for the (N + M + K) antenna ports based on the CSI-RS resource pattern corresponding to the (N + M) antenna ports that has been determined in the embodiment in FIG. 7. With reference to FIG. 8, the following describes an embodiment in which the terminal device performs channel estimation for the (N + M + K) antenna ports based on the determined CSI-RS resource pattern of the (N + M) antenna ports.

As shown in FIG. 8, the method may include step 801 to step S806.

Step 801: A network device sends first information to a terminal device, where the first information indicates a first CSI-RS resource pattern corresponding to N ports; and the terminal device receives the first information.

Step 802: The network device sends first configuration information to the terminal device, where the first configuration information indicates (N + M) antenna ports and a second CSI-RS resource pattern corresponding to M antenna ports; and the terminal device receives the first configuration information.

Step 803: The terminal device performs channel estimation for the (N + M) antenna ports based on the first CSI-RS resource pattern and the second CSI-RS resource pattern.

For detailed content of this part, refer to content in S701 to S703 in the embodiment in FIG. 7. Details are not described again.

Step 804: The network device sends fifth information to the terminal device, where the fifth information indicates to retain a CSI-RS resource pattern corresponding to the (N + M) antenna ports.

Correspondingly, after receiving the fifth information, the terminal device retains the CSI-RS resource pattern corresponding to the (N + M) antenna ports. Optionally, the fifth information may further indicate a duration for which the terminal device retains the CSI-RS resource pattern corresponding to the (N + M) antenna ports.

It should be noted that this step is optional. For example, after determining the CSI-RS resource pattern corresponding to the (N + M) antenna ports, the terminal device may store, by default, the CSI-RS resource pattern corresponding to the (N + M) ports for a period of time. Correspondingly, if the network device indicates, within the period of time, the terminal device to perform channel estimation for the (N + M + K) antenna ports, this step may be omitted.

Step 805: The network device sends third configuration information to the terminal device, where the third configuration information indicates (N + M + K) antenna ports and a fifth CSI-RS resource pattern corresponding to K antenna ports.

In this embodiment, when the network device needs to obtain a channel estimation result of the (N + M + K) antenna ports, because the CSI-RS resource pattern corresponding to the (N + M) antenna ports has been determined previously, the network device determines, based on the previous CSI-RS resource pattern corresponding to the (N + M) antenna ports, a CSI-RS resource pattern corresponding to the remaining K antenna ports, and then indicates, to the terminal device in the third configuration information, the CSI-RS resource pattern corresponding to the remaining K antenna ports.

Step 806: The terminal device performs channel estimation for the (N + M + K) antenna ports based on the CSI-RS resource pattern corresponding to the (N + M) antenna ports and the fifth CSI-RS resource pattern.

In this embodiment, after receiving the third configuration information, the terminal may learn that channel estimation needs to be performed for the (N + M + K) antenna ports. However, because the third configuration information indicates only the CSI-RS resource pattern corresponding to the K antenna ports, the terminal device learns that the CSI-RS resource pattern corresponding to the (N + M) antenna ports should be obtained. Because the terminal device retains the CSI-RS resource pattern corresponding to the (N + M) antenna ports that is previously determined based on the first CSI-RS resource pattern and the second CSI-RS resource pattern, the terminal device may determine, based on the CSI-RS resource pattern corresponding to the (N + M) antenna ports and the CSI-RS resource pattern corresponding to the K antenna ports, a CSI-RS resource pattern corresponding to the (N + M + K) antenna ports, to perform channel estimation for the (N + M + K) antenna ports.

In some implementations, after determining the CSI-RS resource pattern corresponding to the (N + M + K) antenna ports, the terminal device further determines, based on the CSI-RS resource pattern corresponding to the (N + M + K) antenna ports, channel estimation assistance information corresponding to the (N + M + K) antenna ports. After that, the terminal device receives, based on the CSI-RS resource pattern corresponding to the (N + M + K) antenna ports, a CSI-RS signal sent by the network device, and finally obtains a channel estimation result of the (N + M + K) antenna ports by using the channel estimation assistance information corresponding to the (N + M + K) antenna ports.

In some other implementations, when indicating, to the terminal device, the CSI-RS resource pattern corresponding to the K antenna ports, the network device further indicates, to the terminal device, channel estimation assistance information corresponding to the (N + M + K) antenna ports. Correspondingly, the terminal device does not need to calculate the channel estimation assistance information corresponding to the (N + M + K) antenna ports, but directly obtains, based on the CSI-RS resource pattern corresponding to the (N + M + K) antenna ports and the channel estimation assistance information indicated by the network device, a channel estimation result of the (N + M + K) antenna ports.

It can be learned that, in the embodiment shown in FIG. 8, when the network device needs to obtain the channel estimation result of the (N + M + K) antenna ports, because the CSI-RS resource pattern corresponding to the (N + M) antenna ports has been used to perform channel estimation for the (N + M) antenna ports, the network device indicates, to the terminal device, only the CSI-RS resource pattern corresponding to the remaining K antenna ports, thereby reducing overhead of indicating a CSI-RS resource pattern.

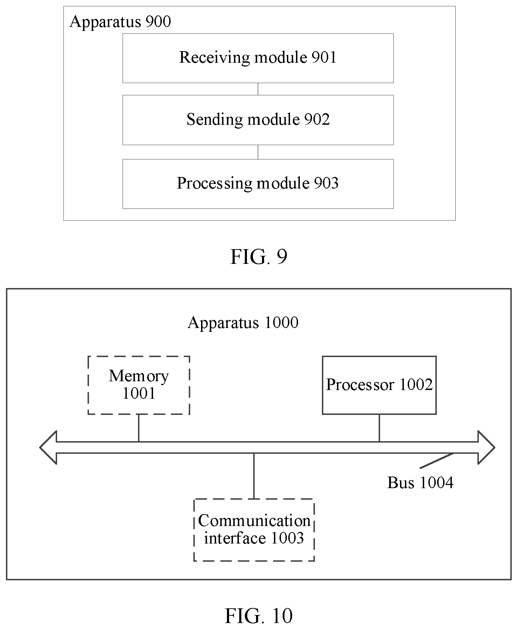

The foregoing describes in detail the communication methods in embodiments of this application with reference to FIG. 7 and FIG. 8. The following describes in detail communication apparatuses provided in embodiments of this application with reference to FIG. 9 and FIG. 10.

FIG. 9 is a diagram of a structure of a communication apparatus according to an embodiment of this application. Specifically, as shown in FIG. 9, the apparatus 900 includes a receiving module 901, a sending module 902, and a processing module 903.

In a first embodiment, the apparatus 900 may be used in a terminal device.

Specifically, the receiving module 901 is configured to receive first information, where the first information indicates a first channel state information reference signal CSI-RS resource pattern corresponding to N antenna ports. The receiving module 901 is configured to receive first configuration information, where the first configuration information indicates (N + M) antenna ports and a second CSI-RS resource pattern corresponding to M antenna ports of the (N + M) antenna ports, and both N and M are positive integers. The processing module 903 is configured to perform channel estimation for the (N + M) antenna ports based on the first CSI-RS resource pattern and the second CSI-RS resource pattern.

In a possible implementation, the receiving module 901 is further configured to receive second information, where the second information indicates channel estimation assistance information corresponding to the (N + M) antenna ports. The processing module 903 is specifically configured to: determine, based on the first CSI-RS resource pattern and the second CSI-RS resource pattern, a CSI-RS resource pattern corresponding to the (N + M) antenna ports; and perform channel estimation for the (N + M) antenna ports based on the CSI-RS resource pattern corresponding to the (N + M) antenna ports and the channel estimation assistance information.

In a possible implementation, the receiving module 901 is further configured to: receive third information, where the third information indicates a third CSI-RS resource pattern corresponding to the N antenna ports; and receive fourth information, where the fourth information indicates to select the first CSI-RS resource pattern from the first CSI-RS resource pattern and the third CSI-RS resource pattern.

In a possible implementation, the receiving module 901 is further configured to receive second configuration information, where the second configuration information indicates (N + L) antenna ports and a fourth CSI-RS resource pattern corresponding to L antenna ports of the (N + L) antenna ports, and L is a positive integer. The processing module 903 is further configured to perform channel estimation for the (N + L) antenna ports based on the first CSI-RS resource pattern and the fourth CSI-RS resource pattern.

In a possible implementation, the receiving module 901 is further configured to receive third configuration information, where the third configuration information indicates (N + M + K) antenna ports and a fifth CSI-RS resource pattern corresponding to K antenna ports of the (N + M + K) antenna ports, and K is a positive integer. The processing module 903 is further configured to perform channel estimation for the (N + M + K) antenna ports based on the CSI-RS resource pattern corresponding to the (N + M) antenna ports and the fifth CSI-RS resource pattern.

In a possible implementation, the receiving module 901 is further configured to receive fifth information, where the fifth information indicates to retain the CSI-RS resource pattern corresponding to the (N + M) antenna ports.

In a possible implementation, the sending module 902 is configured to send sixth information, where the sixth information indicates capability information of the terminal device. The capability information includes at least one of the following: a quantity of retained CSI-RS resource patterns corresponding to the N antenna ports, a maximum value of N, a maximum quantity of supported antenna ports, and a duration for retaining the first CSI-RS resource pattern.

In a possible implementation, the receiving module 901 is further configured to receive seventh information, where the seventh information indicates the terminal device to report the capability information.

In a possible implementation, the seventh information is carried in radio resource control RRC signaling.

In a possible implementation, the sending module 902 is configured to send eighth information, where the eighth information indicates that the first CSI-RS resource pattern is missing.

In a second embodiment, the communication apparatus may be used in a network device or a terminal device.

Specifically, the sending module 902 is configured to: send first information, where the first information indicates a first channel state information reference signal CSI-RS resource pattern corresponding to N antenna ports; and send first configuration information, where the first configuration information indicates (N + M) antenna ports and a second CSI-RS resource pattern corresponding to M antenna ports of the (N + M) antenna ports, where both N and M are positive integers. The receiving module 901 is configured to receive a channel estimation result of the (N + M) antenna ports sent by the terminal device, where the channel estimation result of the (N + M) antenna ports is obtained based on the first CSI-RS resource pattern and the second CSI-RS resource pattern.

In a possible implementation, the sending module 902 is further configured to send second information, where the second information indicates channel estimation assistance information corresponding to the (N + M) antenna ports.

In a possible implementation, the sending module 902 is further configured to: send third information, where the third information indicates a third CSI-RS resource pattern corresponding to the N antenna ports; and send fourth information, where the fourth information indicates to select the first CSI-RS resource pattern from the first CSI-RS resource pattern and the third CSI-RS resource pattern.

In a possible implementation, the sending module 902 is further configured to send second configuration information, where the second configuration information indicates (N + L) antenna ports and a fourth CSI-RS resource pattern corresponding to L antenna ports of the (N + L) antenna ports, and L is a positive integer. The receiving module 901 is further configured to receive a channel estimation result of the (N + L) antenna ports sent by the terminal device, where the channel estimation result of the (N + L) antenna ports is obtained based on the first CSI-RS resource pattern and the fourth CSI-RS resource pattern.

In a possible implementation, the sending module 902 is further configured to send third configuration information, where the third configuration information indicates (N + M + K) antenna ports and a fifth CSI-RS resource pattern corresponding to K antenna ports of the (N + M + K) antenna ports, and K is a positive integer. The receiving module 901 is further configured to receive a channel estimation result of the (N + M + K) antenna ports sent by the terminal device, where the channel estimation result of the (N + M + K) antenna ports is obtained based on a CSI-RS resource pattern corresponding to the (N + M) antenna ports and the fifth CSI-RS resource pattern, and the CSI-RS resource pattern corresponding to the (N + M) antenna ports is obtained based on the first CSI-RS resource pattern and the second CSI-RS resource pattern.

In a possible implementation, the sending module 902 is further configured to send fifth information, where the fifth information indicates to retain the CSI-RS resource pattern corresponding to the (N + M) antenna ports.

In a possible implementation, the receiving module 901 is further configured to receive sixth information, where the sixth information indicates capability information of the terminal device. The capability information includes at least one of the following: a quantity of retained CSI-RS resource patterns corresponding to the N antenna ports, a maximum value of N, a maximum quantity of supported antenna ports, and a duration for retaining the first CSI-RS resource pattern.

In a possible implementation, the sending module 902 is further configured to send seventh information, where the seventh information indicates the terminal device to report the capability information.

In a possible implementation, the seventh information is carried in radio resource control RRC signaling.

In a possible implementation, the receiving module 901 is further configured to receive eighth information, where the eighth information indicates that the first CSI-RS resource pattern is missing.

FIG. 10 is a diagram of a structure of another communication apparatus according to an embodiment of this application. The apparatus shown in FIG. 10 may be configured to perform the method according to any one of the foregoing embodiments.

As shown in FIG. 10, the apparatus 1000 in this embodiment includes a memory 1001 and a processor 1002. In an implementation, the apparatus 1000 further includes a communication interface 1003 and a bus 1004. The memory 1001, the processor 1002, and the communication interface 1003 implement a communication connection to each other through the bus 1004.

The memory 1001 may be a read-only memory (read-only memory, ROM), a static storage device, a dynamic storage device, or a random access memory (random access memory, RAM). The memory 1101 may store a program. When the program stored in the memory 1001 is executed by the processor 1002, the processor 1002 is configured to perform the steps of the methods shown in FIG. 7 and FIG. 8.

The processor 1002 may be a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 7 and FIG. 8 in embodiments of this application.

The processor 1002 may alternatively be an integrated circuit chip having a signal processing capability. In an implementation process, the steps of the methods in FIG. 7 and FIG. 8 in embodiments of this application may be completed by using an integrated logic circuit of hardware in the processor 902 or by using instructions in a form of software.

The foregoing processor 1002 may be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be a conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1001. The processor 1002 reads information in the memory 1001, and completes, in combination with hardware of the processor, functions that need to be performed by units included in the apparatus in this application. For example, the processor may perform the steps/functions in the embodiments shown in FIG. 7 and FIG. 8.

The communication interface 1003 may use, but not limited to, a transceiver apparatus of a transceiver type, to implement communication between the apparatus 1000 and another device or a communication network.

The bus 1004 may include a path for transmitting information between components (for example, the memory 1001, the processor 1002, and the communication interface 1003) of the apparatus 1000.

It should be understood that the apparatus 1000 shown in this embodiment of this application may be an electronic device, or may be a chip configured in an electronic device. The apparatus 1000 may be deployed in a terminal device, or may be deployed in a network device.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects, and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash disk, a removable hard disk drive, a read-only memory, a random access memory, a magnetic disk, or an optical disc.

## Claims

1. A communication method, comprising:
receiving first information, wherein the first information indicates a first channel state information reference signal CSI-RS resource pattern corresponding to N antenna ports;
receiving first configuration information, wherein the first configuration information indicates (N + M) antenna ports and a second CSI-RS resource pattern corresponding to M antenna ports of the (N + M) antenna ports, and both N and M are positive integers; and
performing channel estimation for the (N + M) antenna ports based on the first CSI-RS resource pattern and the second CSI-RS resource pattern.

2. The method according to claim 1, wherein the method further comprises:
receiving second information, wherein the second information indicates channel estimation assistance information corresponding to the (N + M) antenna ports; and
the performing channel estimation for the (N + M) antenna ports based on the first CSI-RS resource pattern and the second CSI-RS resource pattern comprises:
determining, based on the first CSI-RS resource pattern and the second CSI-RS resource pattern, a CSI-RS resource pattern corresponding to the (N + M) antenna ports; and
performing channel estimation for the (N + M) antenna ports based on the CSI-RS resource pattern corresponding to the (N + M) antenna ports and the channel estimation assistance information.

3. The method according to claim 1 or 2, wherein the method further comprises:
receiving third information, wherein the third information indicates a third CSI-RS resource pattern corresponding to the N antenna ports; and
receiving fourth information, wherein the fourth information indicates to select the first CSI-RS resource pattern from the first CSI-RS resource pattern and the third CSI-RS resource pattern.

4. The method according to any one of claims 1 to 3, wherein the method further comprises:
receiving second configuration information, wherein the second configuration information indicates (N + L) antenna ports and a fourth CSI-RS resource pattern corresponding to L antenna ports of the (N + L) antenna ports, and L is a positive integer; and
performing channel estimation for the (N + L) antenna ports based on the first CSI-RS resource pattern and the fourth CSI-RS resource pattern.

5. The method according to any one of claims 2 to 4, wherein the method further comprises:
receiving third configuration information, wherein the third configuration information indicates (N + M + K) antenna ports and a fifth CSI-RS resource pattern corresponding to K antenna ports of the (N + M + K) antenna ports, and K is a positive integer; and
performing channel estimation for the (N + M + K) antenna ports based on the CSI-RS resource pattern corresponding to the (N + M) antenna ports and the fifth CSI-RS resource pattern.

6. The method according to claim 5, wherein the method further comprises:
receiving fifth information, wherein the fifth information indicates to retain the CSI-RS resource pattern corresponding to the (N + M) antenna ports.

7. The method according to any one of claims 1 to 6, wherein the method further comprises:
sending sixth information, wherein the sixth information indicates capability information of a terminal device, and the capability information comprises at least one of the following: a quantity of retained CSI-RS resource patterns corresponding to the N antenna ports, a maximum value of N, a maximum quantity of supported antenna ports, and a duration for retaining the first CSI-RS resource pattern.

8. The method according to claim 7, wherein before sending the sixth information, the method further comprises:
receiving seventh information, wherein the seventh information indicates the terminal device to report the capability information.

9. The method according to claim 8, wherein the seventh information is carried in radio resource control RRC signaling.

10. The method according to any one of claims 1 to 9, wherein the method further comprises:
sending eighth information, wherein the eighth information indicates that the first CSI-RS resource pattern is missing.

11. A communication method, comprising:
sending first information, wherein the first information indicates a first channel state information reference signal CSI-RS resource pattern corresponding to N antenna ports;
sending first configuration information, wherein the first configuration information indicates (N + M) antenna ports and a second CSI-RS resource pattern corresponding to M antenna ports of the (N + M) antenna ports, and both N and M are positive integers; and
receiving a channel estimation result of the (N + M) antenna ports sent by a terminal device, wherein
the channel estimation result of the (N + M) antenna ports is obtained based on the first CSI-RS resource pattern and the second CSI-RS resource pattern.

12. The method according to claim 11, wherein the method further comprises:
sending second information, wherein the second information indicates channel estimation assistance information corresponding to the (N + M) antenna ports.

13. The method according to claim 11 or 12, wherein the method further comprises:
sending third information, wherein the third information indicates a third CSI-RS resource pattern corresponding to the N antenna ports; and
sending fourth information, wherein the fourth information indicates to select the first CSI-RS resource pattern from the first CSI-RS resource pattern and the third CSI-RS resource pattern.

14. The method according to any one of claims 11 to 13, wherein the method further comprises:
sending second configuration information, wherein the second configuration information indicates (N + L) antenna ports and a fourth CSI-RS resource pattern corresponding to L antenna ports of the (N + L) antenna ports, and L is a positive integer; and
receiving a channel estimation result of the (N + L) antenna ports sent by the terminal device, wherein
the channel estimation result of the (N + L) antenna ports is obtained based on the first CSI-RS resource pattern and the fourth CSI-RS resource pattern.

15. The method according to any one of claims 12 to 14, wherein the method further comprises:
sending third configuration information, wherein the third configuration information indicates (N + M + K) antenna ports and a fifth CSI-RS resource pattern corresponding to K antenna ports of the (N + M + K) antenna ports, and K is a positive integer; and
receiving a channel estimation result of the (N + M + K) antenna ports sent by the terminal device, wherein
the channel estimation result of the (N + M + K) antenna ports is obtained based on a CSI-RS resource pattern corresponding to the (N + M) antenna ports and the fifth CSI-RS resource pattern, and the CSI-RS resource pattern corresponding to the (N + M) antenna ports is obtained based on the first CSI-RS resource pattern and the second CSI-RS resource pattern.

16. The method according to claim 15, wherein the method further comprises:
sending fifth information, wherein the fifth information indicates to retain the CSI-RS resource pattern corresponding to the (N + M) antenna ports.

17. The method according to any one of claims 11 to 16, wherein the method further comprises:
receiving sixth information, wherein the sixth information indicates capability information of the terminal device, and the capability information comprises at least one of the following: a quantity of retained CSI-RS resource patterns corresponding to the N antenna ports, a maximum value of N, a maximum quantity of supported antenna ports, and a duration for retaining the first CSI-RS resource pattern.

18. The method according to claim 17, wherein before receiving the fifth information, the method further comprises:
sending seventh information, wherein the seventh information indicates the terminal device to report the capability information.

19. The method according to claim 18, wherein the seventh information is carried in radio resource control RRC signaling.

20. The method according to any one of claims 11 to 19, wherein the method further comprises:
receiving eighth information, wherein the eighth information indicates that the first CSI-RS resource pattern is missing.

21. A communication apparatus, comprising a processor, wherein
the processor is configured to, by executing a computer program and/or using a logic circuit, cause the communication apparatus to implement the method according to any one of claims 1 to 10.

22. A communication apparatus, comprising a processor, wherein
the processor is configured to, by executing a computer program and/or using a logic circuit, cause the communication apparatus to implement the method according to any one of claims 11 to 20.

23. A communication system, comprising the communication apparatus according to claim 21 or claim 22.

24. A computer-readable medium, wherein the computer-readable medium stores program code to be executed by a computer, and the program code comprises instructions used to perform the method according to any one of claims 1 to 10 or claims 11 to 20.

25. A computer program product, wherein the computer program product comprises computer program code, and when the computer program code is run on a computer, the computer is caused to implement the method according to any one of claims 1 to 10 or claims 11 to 20.

26. A chip, comprising at least one processor and a communication interface, wherein the communication interface and the at least one processor are interconnected through a line, and the at least one processor is configured to run a computer program or instructions, to perform the communication method according to any one of claims 1 to 10 or claims 11 to 20.
